(19) 

Europäisches
Patentamt

European
Patent Office

Office européen
des brevets

(11) **EP 1 543 694 B1**

(12) **EUROPEAN PATENT SPECIFICATION**

(45) Date of publication and mention
of the grant of the patent:
**27.01.2010 Bulletin 2010/04**

(21) Application number: **02776939.7**

(22) Date of filing: **22.08.2002**

(51) Int Cl.:
**H04W 24/02** (2009.01)

(86) International application number:
**PCT/EP2002/009394**

(87) International publication number:
**WO 2004/019642 (04.03.2004 Gazette 2004/10)**

(54) **CAPACITY MANAGEMENT IN A COMMUNICATIONS ENVIRONMENT**

KAPAZITÄTSMERKMANAGEMENT IN EINER KOMMUNIKATIONSUMGEBUNG

GESTION DE CAPACITES DANS UN ENVIRONNEMENT DE COMMUNICATIONS

(84) Designated Contracting States:
**AT BE BG CH CY CZ DE DK EE ES FI FR GB GR IE IT LI LU MC NL PT SE SK TR**

(43) Date of publication of application:
**22.06.2005 Bulletin 2005/25**

(73) Proprietor: **TELEFONAKTIEBOLAGET LM ERICSSON (publ)**
**164 83 Stockholm (SE)**

(72) Inventors:
• **HELMER, Gerhard**
**91346 Wiesenttal (DE)**
• **BOLIK, Jürgen**
**95445 Bayreuth (DE)**

(74) Representative: **Röthinger, Rainer**
**Wuesthoff & Wuesthoff**
**Patent- und Rechtsanwälte**
**Schweigerstrasse 2**
**81541 München (DE)**

(56) References cited:
**WO-A-02/32179     US-A- 6 141 565**

• **KU B S: "A reuse-driven service creation environment for the advanced intelligent network" COMMUNICATIONS, 1994. ICC '94, SUPERCOMM/ICC '94, CONFERENCE RECORD, 'SERVING HUMANITY THROUGH COMMUNICATIONS.' IEEE INTERNATIONAL CONFERENCE ON NEW ORLEANS, LA, USA 1-5 MAY 1994, NEW YORK, NY, USA, IEEE, 1 May 1994 (1994-05-01), pages 263-267, XP010126836 ISBN: 0-7803-1825-0**
• **HP OPENCALL MULTISERVICE CONTROLLER RELEASE 1.2, [Online] 2001, XP002222589 Retrieved from the Internet: <URL:http://www.hp.com/communications/open call/products/multsvc/infolibrary/ocmc_bro chureA4.pdf> [retrieved on 2002-11-27]**

**Description**

**BACKGROUND OF THE INVENTION**

**Field of the Invention**

The present invention is generally related to communications environments and, in particular, to an optimization of the capacity management in a communications environment.

**Description of the Prior Art**

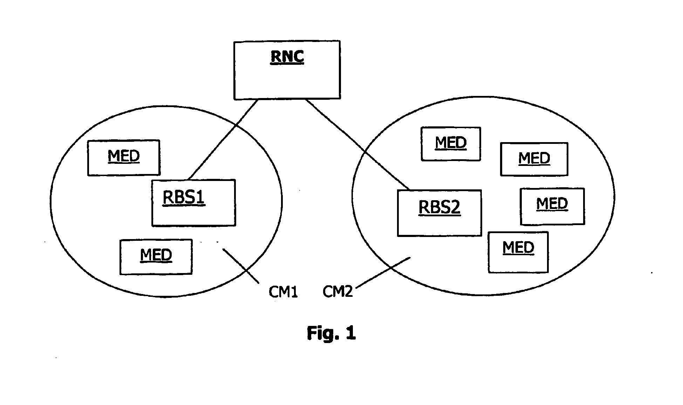

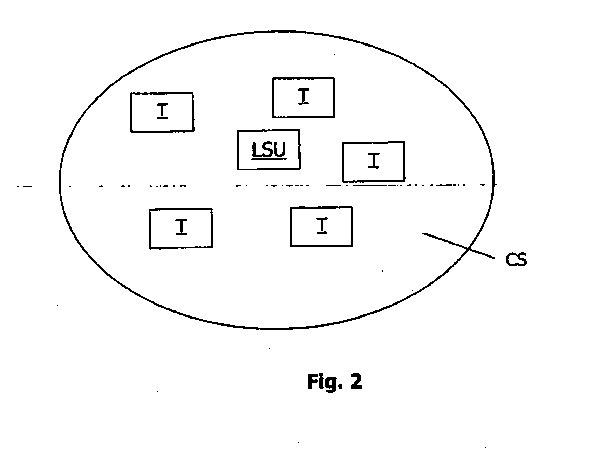

Communications environments can include cellular networks for which individual cells are defined. Each cell services a geographical area and/or a group of entities (e.g. a group of a specific end user devices such as mobile telephones or fixed telephones). Commonly, mobile wireless communications environments such as GSM and UTMS telephone environments are referred to as cellular. But to be exact, also traditional communications environments having wired communication links (e.g. PSTN telephone networks) comprise cells, in particular in terms of geographical areas. Fig. 1 schematically illustrates a single cell of a mobile communications network, while Fig. 2 schematically illustrates a single cell of a PSTN communications network.

Fig. 1 shows two cells CM1 and CM2 of a mobile communications environment such as a GSM or UTMS network. Each of the cells CM1 and CM2 is serviced by a radio base station RBS1 and RBS2, respectively. Mobile end user devices MED located in the geographical area covered by the cell CM1 will perform their communications via the radio base station RBS1, while mobile end user devices MED located in the geographical area covered by the cell CM2 will perform their communications via the radio base station RBS2. Communications between the cells CM1 and CM2 will be accomplished via a radio network controller RNC.

As shown in Fig. 2, a single cell CS of a PSTN network is serviced by a local switching unit LSU. Stationary telephones T can execute communications in the PSTN network via the local switching unit LSU via wired connections in contrast to radio signaling used for communications in the cell shown in Fig. 1. Connections to further cells (not shown) of the PSTN network can be established via area switching units (not shown) which can be compared with radio network controllers in a mobile communications environment.

In both cases, it is necessary to manage the capacity within a single cell in order to provide a desired quality of service. The capacity of the cell CM is, inter alia, determined by the data processing capacity of the radio base station RBS, communications related data communicated to and from a mobile end user device MED, the frequencies and bandwidths allocated for radio communications links and the like. In a comparable manner, the capacity of the cell CS is, inter alia, determined by the data processing capacity of the local switching unit LSU and, here, the transmission capabilities of the wired communications links to and from the stationary telephones T.

The problems arising from capacity management are similar not only for the above exemplary communications environments but also for any other communications environment. Therefore, in the following, it is referred to a GSM network as an illustrative example.

In existing communications networks, different functionalities have been introduced in order to manage the capacity of network cells. In particular, existing architectures for a capacity management for mobile communications networks consist of different functionalities each thereof dedicated to a specific capacity problem in the network. In existing cellular networks, capacity management functionalities are in general based on measurements of the current load of a cell for a specific cell area. On the basis of cell load measurements, it is determined whether there exists a capacity problem. Usually thresholds are defined for the cell load measurements wherein a violation of a specific threshold indicates a specific capacity problem. A threshold violation is used for triggering or initiating actions for capacity management and is predefined for each functionality.

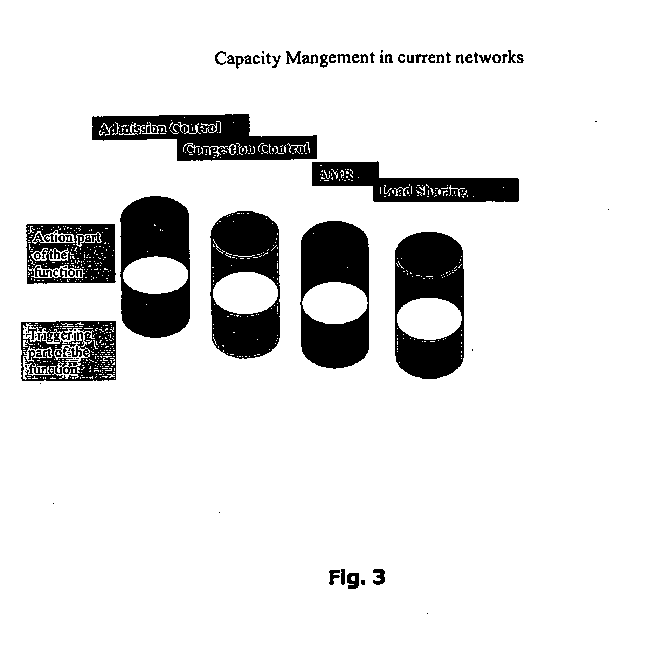

Fig. 3 schematically illustrates examples of capacity management functionalities including "admission control", "congestion control", "AMR (i.e. Adaptive Multi Rate, a speech coding method)" and "load sharing". For each functionality, an action part and a triggering part are defined. The action part of a functionality represents measures to be performed by capacity management in case the capacity problem associated with a respective functionality is existing. In order to initiate an action part of a functionality, a respective triggering part defines cell conditions which represent a capacity problem to be solved by the functionality associated with that triggering part. In general, the triggering parts are based on measurements which are compared with predefined thresholds in real time. For example, the transmission power for a downlink communications link is measured periodically and, if a predefined power limit is exceeded, a respective action part is initiated in order to reduce the load in the cell. Often, different functionalities include the same triggering part or at least rather similar triggering parts. An example for triggering parts often used for different functionalities is the transmission power used for downlink communications.

Further, in existing networks, many different functionalities for capacity management include, at least partially, the same action part. For example, the functionalities "admission control" and "congestion control" include same actions like for example down switching of data communicating end user devices and blocking of end user devices trying to establish a communication link to a radio base station.

Existing approaches exhibit several problems, in particular implementation, configuration and flexibility problems.

For implementing a new functionality it is always necessary that a new triggering part requiring a lot of (new) parameters and a new action part have do be implemented. This increases the complexity of the capacity management, in particular because synergies between different functionalities cannot be used.

Further, a configuration of such known capacity managements is difficult due to the fact that different capacity management functionalities are used. As a result, for a capacity management configuration it is necessary to know how each functionality is working when configuring respective triggering parts, for example setting a threshold for cell load measurements. A further configuration problem is due to the fact that each functionality is defined for a specific part of the capacity management for which a specific triggering part is defined. Thus, each functionality will be activated for solving its associated capacity problem without considering the overall capacity situation. As a result, it is necessary that the set-up of different functionalities, e.g. parameter settings for triggering parts, have to be performed in advance during configuration such that the settings of all functionalities are taken into account to find a proper overall set-up.

Moreover, existing approaches exhibit a flexibility problem in that each functionality has a predefined unchangeable triggering part which is, in turn, unchangeable associated with a respective action part also being unchangeable. This means that after implementation and configuration of such a capacity management, interactions between triggering parts and action parts and, thus, interactions between different functionalities cannot be resolved. As a result, if for example priorities of different action parts are to be changed, the overall setting of the functionalities have to be changed also.

US-A-6 141 565 discloses to manage capacity by dynamically optimizing mobile parameters. In particular, for each network condition a corresponding network parameter set is stored. On occurrence of a network condition the network parameters are adjusted according to the stored set.

The object underlying the present invention is to overcome the above-mentioned problems of existing approaches. In particular, the present invention should provide solutions for an improved capacity management in a communications environment or parts thereof (networks, cells, etc.), in particular with respect to implementation, configuration and flexibility.

## SUMMARY OF THE INVENTION

The invention is defined by the independent claims.

A number of cell situations is defined. Each of the cell situations indicates a different level of utilization of a capacity of the cell. A capacity as used herein refers to the capability of the cell to maintain a specific amount of communication in the cell for a predefined quality of service (QoS). Preferably, the definition of cell situations includes a definition of at least one cell situation which represents a capacity problem for the cell. A capacity problem does not necessarily result in a reduction of communications activities in the cell or a reduction of QoS. Rather, a capacity problem is a cell situation in which the capacity of the cell has to be managed in order to maintain its actually carried out communications or a QoS. Capacity problems also include cell situations in which communications or a QoS cannot be maintained.

Further, a number of capacity management actions for the cell are defined. Capacity management actions as used herein include measures to be taken with respect to the cell for controlling a current utilization level in relation to the cell capacity and vice versa. Capacity management actions can define at least one measure for reducing a current cell capacity use by decreasing a current utilization level. As a further example, capacity management actions can result in a change of the cell capacity, in particular in a cell capacity increase. The latter capacity management actions can, for example, lead to a cell capacity increase, preferably in combination with a QoS increase, in the case of situations exhibiting a low current cell capacity utilization level. In general terms, capacity management actions are employed for controlling a current use of the capacity of a cell.

At least one of the defined cell situations is mapped to at least one of the capacity management actions. It is possible that more than one up to all of the defined cell situations are mapped to at least capacity management actions according to which different cell situations can also be mapped to one capacity management action. Preferably, cell situations representing a capacity problem are mapped to capacity management actions.

Further, it is possible that more than one capacity management actions, for example two, four etc. capacity management actions, are selected in response to a cell situation. In such a case it is possible to weight different capacity management actions with respect to each other for example in view of their respective impact on the cell situation prevailing. The weighted execution of capacity management actions may include for example performing two or more capacity management actions alternating such that each capacity management action is always performed for a specific period of time. Other weighting mechanisms can be implemented as well.

On the basis of a current cell situation for the cell as being determined, a capacity management action is executed if the current cell situation corresponds to a mapped cell situation. In particular the at least one capacity management action will be performed to which a defined cell situation which corresponds to the current cell situation is mapped to.

Cell situations can include at least one of:

- cell states of the cell, for example, a load condition of the cell,
- cell histories of the cell, for example, actually carried out capacity management actions within a predefined period of time prior to or including the time when the current cell situation is determined,
- neighboring cell states of at least one neighboring cell, for example, load conditions of at least one neighboring cell, and
- neighboring cell histories of at least one neighboring cell, for example, actually carried out capacity management actions carried out in at least one neighboring cell prior to or including the time when the current cell situation is determined.

Each of the above cases for cell situations can be implemented alone. Preferably, at least two of the above cell situation cases are implemented in combination.

In dependence of the definition of cell situations according to at least one of the above cell situation cases, the mapping of cell situations to capacity management actions and the execution of capacity management actions is carried out correspondingly.

In case of a combination of at least two of the above cell situation cases, it is possible that an execution of at least one capacity management action will be in response to at least one of the at least two chosen cell situation cases. For example, it is possible that a capacity management action is executed in response to a current cell situation corresponding to a defined cell state or to a defined cell history or in response to a current cell situation corresponding to both a defined cell state and a defined cell history.

Preferably, a number of allowable mappings of cell situations to capacity management actions is defined. The at least one mapping of a cell situation to a capacity management action may then be carried out if that mapping corresponds to one of the allowable mappings. This ensures that an actually carried out mapping of a cell situation to a capacity management action will meet the requirements of the communications environment and, in particular, of the cell, by defining respective allowable mappings.

For different communications environments and for different parts of one communications environment it can be necessary to execute a different number of different mappings of cell situations to capacity management actions. In such cases it is preferred to define at least two mapping sets of allowable mappings with respect to a mapping of cell situations to capacity management actions. Here, the mapping of cell situations to capacity management actions is repeated until all mappings (to be) carried out are in the set of all allowable mappings of one of the mapping sets. This ensures that not only individual mappings will meet the requirements of the communications environment, in particular the cell, but also all mappings will do so. Further, this procedure makes it possible to obtain different mapping configurations on the basis of the same cell situations and the same capacity management actions in one or different communications environments.

To support a user carrying out the method , is contemplated to employ a graphical user interface for mapping cell situations to capacity management actions on a graphical display.

For the above case of cell states as cell situations, the current cell state can be calculated on the basis of measurements of the level of utilization of the cell capacity, for example, measurements of transmission power in downlink communications. In addition or as alternative it is possible to monitor the use of cell components such as hardware units and software programs, in order to determine the cell situation and in particular the current cell load.

To solve the above object, the present invention also provides an apparatus for capacity management in a communications environment and a software program product.

Further, it is provided a graphical user interface for capacity management in a cellular communications environment, wherein the capacity management is based on a number of cell situations for a cell of the cellular communications environment, each cell situation being indicative of a use of a capacity of the cell, and a number of capacity management actions for the cell, each capacity management action decreasing a current use of the capacity of the cell. The graphical user interface which can form an integral or external part of the capacity management comprises means for selecting at least one of the cell situations, means for selecting at least one of the capacity management actions and means for mapping the at least one selected cell situation to at least one selected capacity management action.

The means used for selecting and mapping can comprise graphical representations of the cell situations, the capacity management actions and the mapping operations for display on a graphical display. Suitable graphical representations include drag-and-drop mechanisms, lists, icons, images, (pull-down) menus and the like for visually presenting the cell situations and the capacity management actions.

The selecting means can further comprise a pointing device or an input means, such as a mouse, allowing a user to interactively select cell situations and capacity management actions.

The mapping means can also comprise a pointing device or an input means, such as a mouse, allowing a user to perform the mapping by means of drag-and-drop functions or by means of (graphically) connecting graphical representations of the cell situations and the capacity management actions.

For communication between the graphical user interface and the capacity management it is possible to use means for providing mapping information to the capacity management. Here, the mapping information is indicative of the mapping of selected cell situations to selected capacity management actions. Suitable means in this regard comprise at least one of a hardware and a software interface to the capacity management.

Preferably, the graphical user interface comprises a graphical display. Further, it is preferred that the graphical user interface is adapted for use in capacity management being at least one of performed by executing the steps of the method according to the invention and implemented by means of the apparatus according to the invention. In particular, the graphical user interface can be at least one of adapted to carry out the mapping of the method according to the invention and a mapping unit of the apparatus according to the present invention.

A configuration of a capacity management according to the present invention is less expensive compared with a configuration according to prior approaches. Approximately, a cost reduction of about 50% can be obtained. This is due to the fact that conventionally, all parameters for triggering capacity management actions had to be tuned for each functionality, separately. According to the invention, many parameters for initiating capacity management actions need to be only tuned once. This significantly reduces necessary efforts to configure a capacity management according to the present invention.

New capacity management actions can be easier implemented, since new capacity management actions can be easily mapped to given cell situations. The effort for implementing new capacity management actions will be reduced at least by about 30 %. This is due to the fact that for prior approaches it is necessary to implement a new capacity management functionality including a triggering part and an action part when a new action part was required. According to the present invention, the part for initiating capacity management actions (cell situation part/unit of the present invention) can be used further.

A capacity management according to the present invention can be configured and implemented in a more reliable manner. For a configuration according to the present invention, mapping matrices can be used which include the setting of all functions. Before actually using the mapping matrix for configuration, it may be checked whether the mapping matrix is an allowed matrix, i.e. an element of a respective allowed matrices set. If this is the case, configuration by means of that mapping matrix will meet the requirements of the respective communications environment or at least part thereof for which a capacity management is to be carried out.

A capacity management according to the present invention is flexible and can be easily adapted to specific requirements in communications environments. The flexibility and easy adaptability of a capacity management according to the invention is mainly due to the fact that mapping of cell situations to capacity management actions can be easily performed and easily repeated. For example, a communications environment including a GSM network can define a mapping of a cell situation to a capacity management action "hand over to GSM network". In contrast thereto, a communications environment including no GSM network can easily replace the latter mapping by a mapping of a corresponding cell situation to a capacity management action "inter frequency hand over". In particular, the use of a graphical user interface provides for user-friendly mapping capabilities.

## BRIEF DESCRIPTION OF THE DRAWINGS

In the following description of preferred embodiments it is referred to the accompanying figures wherein:

Fig. 1       is a schematical illustration of a cell of a mobile communications environment,

Fig. 2       is a schematical illustration of a cell of a stationary communications environment,

Fig. 3       is a schematical illustration of capacity functionalities in a prior art capacity management approach,

Fig. 4       is a schematical illustration of the basic principle underlying the present invention,

Fig. 5       is a schematical illustration of an embodiment of the present invention based on cell states,

Fig. 6       is a schematical illustration of an embodiment of the present invention based on cell histories,

Fig. 7      is a schematical illustration of a capacity management device according to the present invention based on cell states,

Fig. 8      is a schematical illustration of a capacity management device according to the present invention based on cell histories,

Fig. 9      is a schematical illustration of a capacity management device according to the present invention based on area load management,

Fig. 10     is a schematical illustration of a capacity management device according to the present invention based on cell states and cell histories,

Fig. 11     is a schematical illustration of a capacity management device according to the present invention based on cell states, cell histories and area load management,

Fig. 12     is a schematical illustration of a capacity management device according to the present invention based on cell states and area load management, and

Fig. 13     is a schematical illustration of a capacity management device according to the present invention based on cell histories and area load management.

## DESCRIPTION OF PREFERRED EMBODIMENTS

As described above, according to known approaches separate, not interconnected triggering parts and action parts respectively associated with each other are used for a capacity management in a communications environment. The present invention proposes among other things to use a single capacity management part for determining whether a capacity problem is existing in a communications environment and to use a single capacity management part for initiating measures to solve the existing capacity problem.

For determining whether a capacity problem is existing, the situation of a cell in a communications environment is described by so-called cell states and/or a so-called cell history, both thereof being described in detail below.

For initiating measures to resolve one or more capacity problems, a so-called management actions toolbox is introduced. The capacity management actions toolbox defines a number of at least two possible capacity management actions or measures to be carried out to solve an existing capacity management problem. The definition of the toolbox can be, for example, provided by the network supplier of the communications environment.

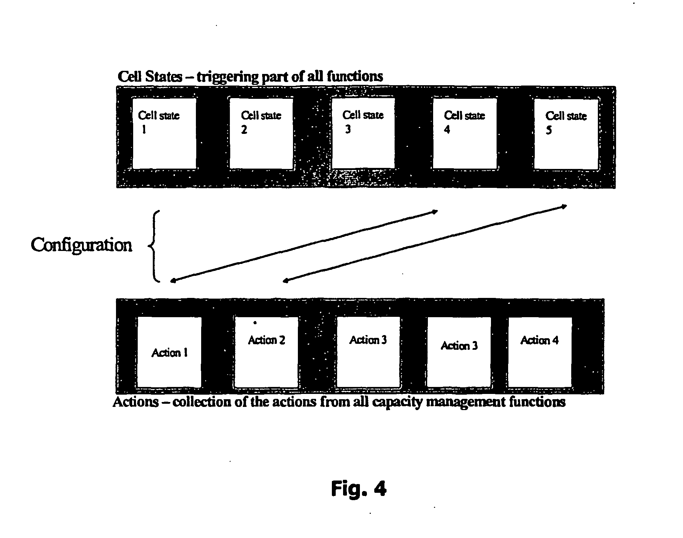

To invoke a capacity management action in response to a situation in a cell, cell situations are mapped to suitable capacity management actions which solve a capacity problem associated with a cell situation. In Fig. 4 the above described basic principle is illustrated for a capacity management based on cell states as cell situations which are mapped to capacity management actions. In this figure, the mapping of cell states to actions is indicated by arrows. As will be described below, the mapping between cell situations and suitable capacity management actions will be obtained by a configuration of the capacity management.

In order to consider capacity situations of more cells in a communications environment, preferably neighboring cells, it is also contemplated to describe the cell situation in dependence of the capacity situation of at least one neighboring cell. This embodiment will be referred to as area capacity management in which, in particular, capacity management actions of a cell also depend on capacity problems in at least one neighboring cell.

Cell state based capacity management

In order to describe a load situation in a cell, a vector $\vec{C}^T$ of cell states $c_1,...,c_n$ is defined:

$$\vec{C}^T = \{c_1, c_2, ..., c_n\},$$

wherein n is the number of cell states, $\vec{C} \in N^n$ and "T" indicates that the vector $\vec{C}$ is transposed.

Available measurements reflecting the load situation in the cell are described in the measurement vector $\vec{C}^T$ wherein the cell states $c_1,...,c_n$ can be defined as follows:

$$c_1 = f_1(\vec{C})$$
$$c_2 = f_2(\vec{C})$$
$$\vdots$$
$$c_n = f_n(\vec{C}),$$

wherein it is possible to use a set of functions $\vec{F}^T = \{f_1, f_2, ..., f_n\}$.

The cell states $c_1, ..., c_n$ describing the load situation in the cell can be calculated from measurements of physical measures being indicative of a cell situation. For example, measurements of transmission power in downlink communications can be used to calculate the load of a cell. Further, cell situations can be determined on the basis of information from hardware and/or software resource monitoring units. Such units monitor the use of hardware and/or software components of a cell and provide information to which extent such components are used, i.e. how the cell is loaded.

The following table 1 shows an example of cell states, corresponding downlink transmission power measurement and resulting cell state vectors:

| cell state | downlink power p [W] | $\vec{C}^T = \{c_1, c_2, ..., c_n\}$ |
|---|---|---|
| no load | $P \le 12$ | {1,0,0,0,0} |
| low load | $12 < p \le 14$ | {0,1,0,0,0} |
| medium load | $14 < p \le 16$ | {0,0,1,0,0} |
| high load | $16 < p \le 18$ | {0,0,0,1,0} |
| congestion | $18 < p$ | {0,0,0,0,1} |

The right column of table 1 represents a set of functions for the exemplary cell states in its left column. The middle column of table 1 represents downlink transmission power measurement values/ranges which indicate, if measured, a respective cell state. Preferably, downlink transmission power measurements are performed continuously such that it is possible to map for each point of a time a downlink transmission power measurement value to a cell state.

Cell history

Cell history as used herein indicates previously carried out capacity management actions for solving a capacity problem within the cell in a predefined time period. Such capacity management actions or cell history are documented in a cell history vector $\vec{H}$.

For example, a time period of 300 ms can be defined for which all taken capacity management actions are registered in the cell history vector $\vec{H}$. That means that for a given point of time all taken capacity management actions previously occurring in a time frame of 300 ms are memorized. Nevertheless, other predefined time periods or frames can be used, for example time frames of 50, 100, 200, 500 or 900 ms etc.

In the cell history vector $\vec{H}$ the number of actually carried out capacity management actions within a predefined time period is registered. If, for example, in the predefined time period no taken capacity management action is documented it can be assumed that the cell is operating properly. As a result, it can be expected that a current and, thus, subsequently occurring capacity problem will not be really critical for the operation of the cell and can be solved by carrying out respective capacity management actions.

In case a number of taken capacity management actions is documented, for example one, two or three actions, it can be assumed that the cell is already working at its capacity limit whereby a number of capacity management actions had to be executed to solve capacity problems. In consequence, for a currently occurring capacity problem a capacity management action can be selected which has a stronger impact on the cell condition (e.g. cell load) compared to the case the current capacity problem occurs alone.

Further, it is possible to define a limit for the number of taken capacity management actions documented in the cell history vector $\vec{H}$. Such a limit can indicate that the cell has a severe capacity constraint and is virtually continuously operating on its capacity limit. Then, if the number of taken capacity management actions documented in the cell history vector $\vec{H}$ reaches such a predefined limit, for example three actions, a capacity management action is selected for current problem which has a stronger impact on the cell situation compared to the previous history case or having the strongest possible impact on the cell situation.

The cell history vector $\vec{H}$ makes it possible not only take into account the current cell situation but also previous cell situations. As a result, capacity management actions to be carried out currently can be selected such that the cell situation (e.g. cell load) is altered in such a manner that a further cell operation will not be on the capacity limit of the cell for a longer period of time. In other words, without considering the cell history, a cell operating near its capacity limit will require a high number of subsequent capacity management actions which actually solve capacity problems for a short period of time but do not effect a fundamental improvement of the cell situation.

Capacity management actions tool box

The capacity management actions toolbox defines actions or measures for solving existing capacity problems in the cell. For the capacity management actions toolbox, an action vector $\vec{A}$ is defined:

$$\vec{A}^{T} = \{a_1, a_2, ..., a_m\},$$

wherein m is the number of possible actions and 'T' indicates that the action vector $\vec{A}$ is transposed.

Each of the actions $a_1$, ...., $a_m$ decreases, if initiated, the load of the cell. Exemplarily, the action vector $\vec{A}$ is here defined such that $a_1$ has the smallest impact on the cell load (i.e. smallest cell load decrease), while $a_m$ has the strongest impact on the cell load (i.e. strongest cell load decrease).

The following table 2 shows an example of actions which, if initiated, decrease the cell load and resulting action vectors $\vec{A}$ in line with the above cell load impact order:

Table 2

| Action | $\vec{A}^{T} = \{a_1, a_2, ..., a_m\}$ |
|---|---|
| block speech | {1,0,0,0,0} |
| block data user | {0,1,0,0,0} |
| lower AMR | {0,0,1,0,0} |
| down switch best effort user | {0,0,0,1,0} |
| dropping of speech users | {0,0,0,0,1} |

In this exemplary definition of the capacity management actions toolbox, the action "block speech" has been chosen as the action having the smallest impact on the cell load while the subsequent actions "block data user", "lower AMR" (AMR: = Adaptive Multi Rate, i.e. a speech coding), "down switch best effort user" and "dropping of speech users" are actions with increasing impact on the cell load in this order. Which actions will actually be defined for a communications environment and, in particular, cells thereof, depends on its current configuration (e.g. bandwidths, frequency range, hardware, software and the like). It is assumed that the operator of a communications environment or a supplier of a network provides or predefines actions or a capacity management actions toolbox. Table 2 shows action vectors $\vec{A}$ respectively characterizing single capacity management actions. Nevertheless, it is possible to employ action vectors defining more than one capacity management action to be executed in response to a cell situation. For example, action vectors like {1,0,1,1,0}, {1,0,1,0,1}, {1,0,0,0,1} and the like are contemplated.

Mapping of cell states to capacity management actions

The cell state vector $\vec{C}^{T}$ indicates the load situation in the cell. The capacity management actions toolbox defines possible capacity management actions which, if carried out, decrease the cell load. In order to initiate a capacity management action in response to a cell state, the capacity management actions contemplated to be carried out for the cell are calculated by using a mapping B of the cell state vector $\vec{C}^{T}$ :

$$B : \vec{C} \to \vec{R_C},$$

wherein the possible actions vector $\vec{R}_C$ indicates capacity management actions in response to cell states.
This mapping B can be implemented as follows:

$$(\vec{R_C}) = (B\vec{C})_i = \sum_{1 \leq j \leq n} b_{ij} c_j,$$

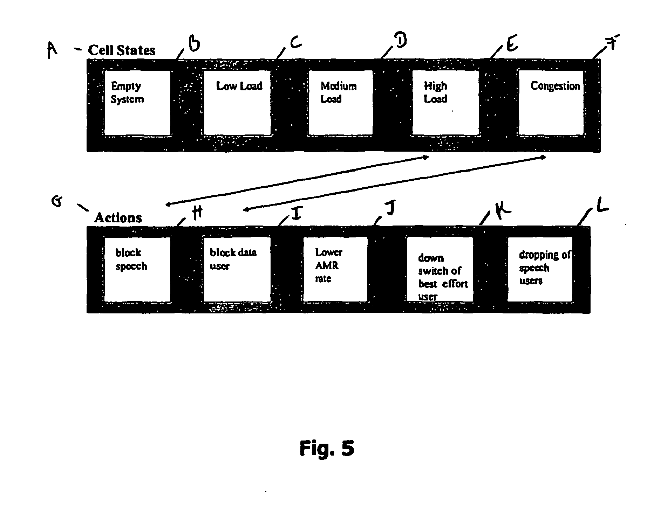

wherein $B = (b_{ij})$ is the mapping matrix for the cell states $c_j$.
Further, a set B of matrices B can be defined which itself defines all allowed matrices B for the cell. Then, a mapping matrix B for mapping a cell states vector $\vec{C}^T$ to a possible actions vector $\vec{R}_C$ is valid (i.e. may be actually used) if it is an element of the matrix set $\underline{B}$.
An example of such a mapping of cell states to capacity management actions will be explained with reference to Fig. 5. In the upper portion of Fig. 5 the cell states of above table 1 are illustrated wherein the downlink transmission power has been chosen as basis for the cell states. In the lower portion of Fig. 5 the capacity management actions of above table 2 are illustrated wherein in this example five actions are provided. For configuring the capacity management of the cell for this example, capacity management actions are mapped to cell states. In Fig. 5, such a mapping is indicated by arrows 1 and 2.
In this example, the cell capacity management will block speech users (see Fig. 5 action "block speech") when the cell state is determined as "high load" (see Fig. 5 cell state "high load"). Further, if in this example the cell exhibits the cell state "congestion", the cell capacity management will initiate the capacity management action "block data user".
Thus, the cell state vector $\vec{C}^T = \{0,0,0,1,0\}$ is mapped to the possible actions vector $\vec{R}_C = \{1,0,0,0,0\}$ and the cell state vector $\vec{C}^T = \{0,0,0,0,1\}$ is mapped to the possible action vector $\vec{R}_C = \{0,1,0,0,0\}$.
This mapping can be represented by the following mapping matrix B:

$$B = \begin{pmatrix} 0 & 0 & 0 & 1 & 0 \\ 0 & 0 & 0 & 0 & 1 \\ 0 & 0 & 0 & 0 & 0 \\ 0 & 0 & 0 & 0 & 0 \\ 0 & 0 & 0 & 0 & 0 \end{pmatrix} \subseteq \underline{B}.$$

Mapping of cell histories to capacity management actions

Comparable to the above mapping of cell states to capacity management actions, a mapping D is used to initiate capacity management actions in response to cell histories. The capacity management actions contemplated to be carried out for the cell are calculated by using a mapping D of the cell history vector $\vec{H}$:

$$D : \vec{H} \to \vec{R_H},$$

wherein the possible actions vector $\vec{R}_H$ indicates capacity management actions in response to cell histories.
This mapping D can be implemented as follows:

$$\vec{R_H} = D\vec{H},$$

where D is the mapping matrix for the history counter $\vec{H}$. As above, a set $\underline{D}$ of matrices can be defined which itself defines all allowed matrices D. Then, a matrix D for mapping the cell history to a possible actions vector $\vec{R}_H$ has to be an element of the matrix set D.

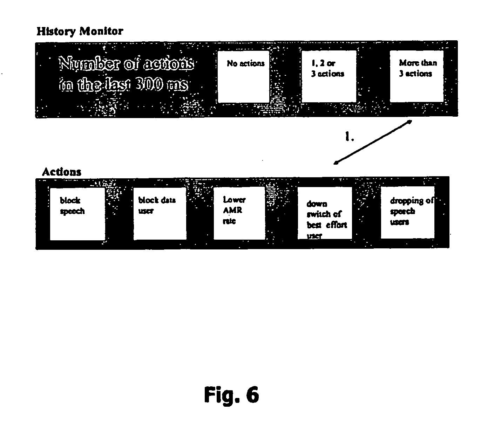

Fig. 6 illustrates an example for three different cell histories and the capacity management actions as used in the example shown in Fig. 5. In this example, three different cell histories are distinguished, namely the cell history "no actions", "1, 2 or 3 actions" and "more than three actions". In this example, for determining a cell history a time period of 300 ms is defined. Thus, the three cell histories indicate that within the last 300 ms no capacity management actions, 1, 2 or 3 capacity management actions or more than three capacity management actions have been carried out.

In order to carry out capacity management actions in response to cell histories, cell histories are mapped to capacity management actions. As an example, this is indicated in Fig. 6 by arrow 1 so as to map the cell history "more than three actions" to the capacity management action "down switch of best effort user".

For the mapping shown in Fig. 6 the following mapping matrix D is valid:

$$D = \begin{pmatrix} 0 & 0 & 0 \\ 0 & 0 & 0 \\ 0 & 0 & 0 \\ 0 & 0 & 1 \\ 0 & 0 & 0 \end{pmatrix} \subseteq \underline{D}.$$

Cell state or cell history based capacity management

For carrying out a capacity management in a communications environment, capacity management actions to be carried out can be defined to be initiated in response to either cell states or cell histories (see sections "mapping of cell states to capacity management actions" and "mapping of cell histories to capacity management actions"). Here, the above defined possible actions vector $\vec{R}_C$ or the above defined possible actions vector $\vec{R}_H$ is used.

Cell state and cell history based capacity management

Capacity management in a communications environment can also be based on both cell states and cell histories. In such cases capacity management actions to be carried out to solve a capacity problem are initiated in response to a cell state and a cell history documented for the time the cell state is determined.

Comparable to the above possible actions vector $\vec{R}_C$ due to cell states and the above possible actions vector $\vec{R}_H$ due to cell histories, a possible actions vector $\vec{R}$ can be defined which indicates all capacity management actions possible for a cell due to both its cell states and its cell histories. A general approach would be to describe a possible actions vector $\vec{R}$ as (e.g. vector valued) function of $\vec{R}_H$ and $\vec{R}_C$. Such a possible actions vector $\vec{R}$ can be defined as:

$$\vec{R} = \vec{R}_H + \vec{R}_C,$$

if the capacity management action in response to a cell state and a capacity management action in response to a cell history should be carried out.

In case a cell history does not require a capacity management action while a cell state requires a capacity management action, the capacity management action to which that cell state is mapped will be carried out. Vice versa, in the case, a cell history requires a capacity management action, while a cell state does not require a capacity management action, the capacity management action to which that cell history is mapped will be executed. If both a cell state and a cell history will require a capacity management action, both capacity management actions to which that cell state and that cell history are respectively mapped to will be performed.

Further, it is possible to define a possible actions vector $\vec{R}$ as follows:

$$\vec{R} = \text{Max}(\vec{R}_C, \vec{R}_H),$$

if a capacity management action to be carried out in response to a cell state and to a cell history should be the capacity management action having the stronger impact on the cell situation. If, for example, a cell history requires the capacity management action "down switch best effort user", while a cell state requires the capacity management action "block data user" (see Fig. 5 and 6), the capacity management action "downswitch of best effort user" will be executed since its impact is larger than the impact of the capacity management action "block data user".

In a comparable manner, a possible actions vector $\vec{R}$ as defined in the following can be used:

$$\vec{R} = \text{Min}(\vec{R}_C, \vec{R}_H),$$

if the capacity management action to be executed in response to a cell state and a cell history should be the capacity management action mapped thereto having the weaker impact on the cell situation.

Area capacity management implementation

As an option with respect to the above cell state or cell history and cell state and history based capacity managements, a so-called area capacity management (ACM) can be implemented. Here, not only the cell situation (at least one of cell states and cell histories) is considered for a capacity management and for carrying out capacity management actions. Rather, the cell situation (at least one of cell states and cell histories) of at least one neighboring cell is taken into account.

The capacity management for the at least one neighboring cell to be considered for a capacity management can be performed as described above on the basis of at least one of cell states $\vec{C}^T_{ACM}$ and cell histories $\vec{H}_{ACM}$ for a neighboring cell. Comparable to the above described mapping, cell situations of a neighboring cell are mapped to suitable capacity management actions $\vec{A}^T$. For cell states $\vec{C}^T_{ACM}$ of a neighboring cell as its cell situation, a mapping matrix $B_{ACM}$ and a matrices set $\underline{B}_{ACM}$ can be used. For a mapping of cell histories $\vec{H}_{ACM}$ of a neighboring cell as its cell situation a mapping matrix $D_{ACM}$ and a matrices set $\underline{D}_{ACM}$ can be employed. Comparable to the above combination of cell states and cell histories, such a combination is also contemplated for a capacity management considering cell situations of at least one neighboring cell.

A general approach would be to describe a possible actions vector $\vec{R}$ as (e.g. vector valued) function of $\vec{R}_C$, $\vec{R}_H$ and $\vec{R}_{ACM}$. For carrying out such a capacity management in a communications environment considering at least one neighboring cell, the following exemplary possible actions vectors $\vec{R}$ can be used:

$$\vec{R} = \vec{R}_C + \vec{R}_H + \vec{R}_{ACM},$$

$$\vec{R} = \text{Max}(\vec{R}_C, \vec{R}_H, \vec{R}_{ACM})$$

and

$$\vec{R} = \text{Min}(\vec{R}_C, \vec{R}_H, \vec{R}_{ACM}),$$

wherein $\vec{R}_{ACM}$ defines capacity management actions in response to a cell situation of at least one neighboring cell. The observations given above with respect to the above possible actions vectors $\vec{R}$ apply here correspondingly. Although not described in detail, a capacity management of a cell can be only based on a cell situation of at least one neighboring cell.

Capacity management configuration

In the following, a configuration for a capacity management based on both cell states and cell histories is described.

For determining the situation of a cell, a number of cell states, a set of functions for calculating cell states of the cell, for example based on measurements and/or monitoring of cell components (hardware, software, ...), and a number of cell histories are defined. Further, a number of different capacity management actions is defined.

EP 1 543 694 B1

Then, suitable capacity management actions are mapped to the cell states and suitable capacity management actions are mapped to the cell histories. Such a mapping can be easily performed by means of a graphical user interface which displays, comparable to Fig. 5 and 6, cell states, cell histories and capacity management actions. In this case, a mapping of cell states and cell histories to capacity management actions can be easily performed by connecting cell states/histories with suitable capacity management actions on the graphical display, for example, resulting in the arrows shown in these figures.

The mapping of cell states to capacity management actions and the mapping of cell histories to capacity management actions are performed until the mapping matrix B is an element of the matrices set $\underline{B}$ and until the mapping matrix D is an element of the matrices set $\underline{D}$.

For a configuration of a capacity management based on either cell states or cell histories, the above described configuration procedure is modified such that steps with respect to cell states or cell histories are omitted.

For extending the above configuration procedure to a capacity management considering the cell situation of at least one neighboring cell, a number of cell situations of the neighboring cell to be considered are defined and mapped to suitable capacity management actions. In case a graphical user interface is used, a modification with respect to the cell situation of the at least one neighboring cell is advantageous.

Again, the mapping of neighboring cell(s) situations (at least one of cell states and cell histories) will be performed until at least one of a mapping matrix $B_{ACM}$ being an element of the matrices set $\underline{B}_{ACM}$ and a mapping matrix $D_{ACM}$ being an element of the matrices set $\underline{D}_{ACM}$ are obtained.

Determination of cell states

As set forth above, a determination (e.g. measurement) of the transmission power actually used in a downlink can be employed for a determination of cell states. Further parameters whereon a determination of cell states can be based include the transmission power in an uplink, the number of actually active user equipment in the cell and/or neighboring cell(s), the amount of data (data traffic) communicated in a cell and/or neighboring cell(s), the type of data (voice, video, raw data) communicated in a cell and/or neighboring cell(s), environmental conditions (e.g. rain or snow fall) possibly affecting communications in a cell and/or neighboring cell(s), hardware and/or software limitations, RF limitations, limitations in shared networks due to contracts (e.g. license agreements) and the like.

For determining cell states it is contemplated that, as in the above description, a single measure (e.g. downlink transmission power) or several measures simultaneously can be employed. In the latter case, it is further contemplated to weight different measures being indicative of cell states with respect to each other in view of its impact on a cell state.

Apparatus for cell state based capacity management

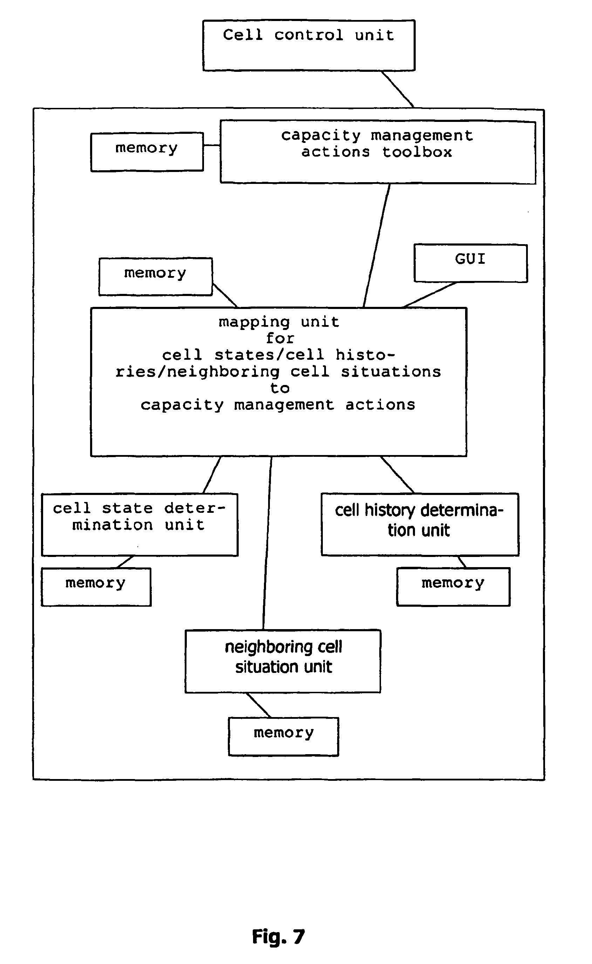

Fig. 7 illustrates an apparatus for a capacity management based on cell states. The apparatus comprises a cell state determination unit for determining the current state of a cell in a communications environment, for example a current cell load. Associated therewith a memory is provided in which data for an operation of the cell state determination unit can be stored. Such data include, for example, the number of defined cell states to be determined and functions for determining cell states.

Further, the apparatus comprises a mapping unit which maps cell states to capacity management actions as described above. In a memory associated thereto, operating data for the mapping unit can be stored, for example, mapping matrices B and a corresponding matrices set $\underline{B}$.

A capacity management actions toolbox provides for capacity management actions in response to cell states. An associated memory can store respective operating data, such as definitions of different capacity management actions.

For carrying out capacity management actions the capacity management actions toolbox advises a cell control unit to execute a capacity management action to solve a specific capacity problem due to a determined cell state.

In operation, the cell state determination unit determines a current cell state and transmits data indicative thereof to the mapping unit. The mapping unit maps the determined cell state according to a mapping matrix B to a suitable capacity management action and outputs respective data to the capacity management actions toolbox. In response thereto, the capacity management actions toolbox selects the requested capacity management action and advises the cell control unit to execute that capacity management action.

Apparatus for cell history based capacity management

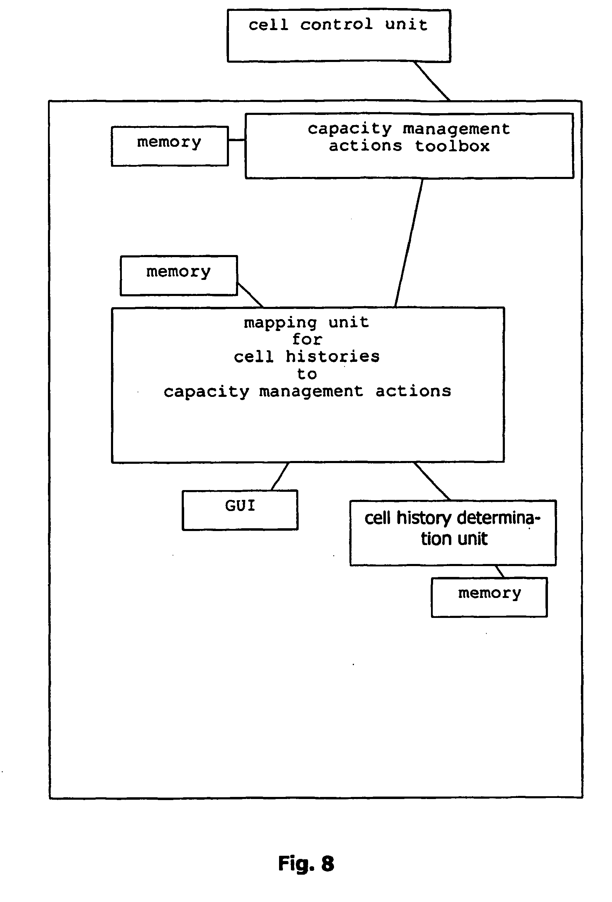

Fig. 8 illustrates an apparatus for a capacity management based on cell histories. The apparatus comprises a cell history determination unit for determining the current history of a cell in a communications environment. Associated therewith a memory is provided in which data for an operation of the cell history determination unit can be stored. Such data include, for example, the number of defined cell histories to be determined and functions for determining cell histories.

Further, the apparatus comprises a mapping unit which maps cell histories to capacity management actions as described above. In a memory associated therewith, operating data for the mapping unit can be stored, for example, mapping matrices D and a corresponding matrices set $\underline{D}$.

A capacity management actions toolbox provides for capacity management actions in response to cell histories. An associated memory can store respective operating data, such as definitions of different capacity management actions.

For carrying out capacity management actions the capacity management actions toolbox advises a cell control unit to execute a capacity management action to solve a specific capacity problem due to a determined cell history.

In operation, the cell history determination unit determines a current cell history and transmits data indicative thereof to the mapping unit. The mapping unit maps the determined cell history according to a mapping matrix D to a suitable capacity management action and outputs respective data to the capacity management actions toolbox. In response thereto, the capacity management actions toolbox selects the requested capacity management action and advises the cell control unit to execute that capacity management action.

Apparatus for area capacity management based capacity management

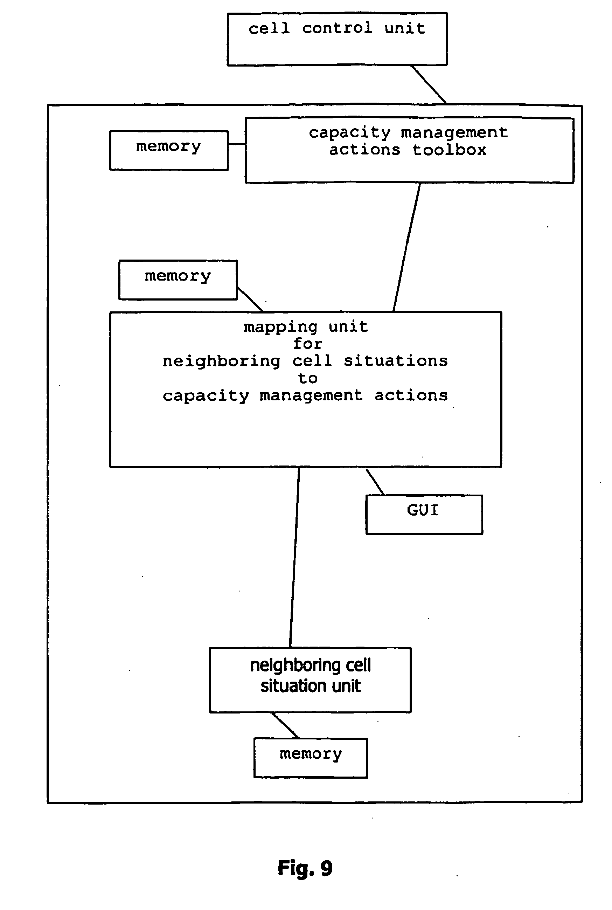

Fig. 9 illustrates an apparatus for a capacity management based on cell situations of at least one neighboring cell. The apparatus comprises a neighboring cell situation unit for determining the current situation of at least one neighboring cell. Associated therewith a memory is provided in which data for an operation of the neighboring cell situation unit can be stored. Such data include, for example, the number of defined cell situations to be determined and functions for determining neighboring cell situation.

Further, the apparatus comprises a mapping unit which maps neighboring cell situations to capacity management actions as described above. In a memory associated thereto, operating data for the mapping unit can be stored, for example, mapping matrices $B_{ACM}$, $D_{ACM}$ and corresponding matrices sets $\underline{B}_{ACM}$, $\underline{D}_{ACM}$.

A capacity management actions toolbox provides for a capacity management actions in response to neighboring cell situation. An associated memory can store respective operating data, such as definitions of different capacity management actions.

For carrying out capacity management actions the capacity management actions toolbox advises a cell control unit to execute a capacity management action to solve a specific capacity problem due to a determined neighboring cell situation.

In operation, the neighboring cell unit determines a current neighboring cell situation of at least one neighboring cell and transmits data indicative thereof to the mapping unit. The mapping unit maps the determined neighboring cell situation according to a mapping vector $\underline{B}_{ACM}$, $\underline{D}_{ACM}$ to a suitable capacity management action and outputs respective data to the capacity management actions toolbox. In response thereto, the capacity management actions toolbox selects the requested capacity management action and advises the cell control unit to execute that capacity management action.

Apparatus for cell state and history based capacity management

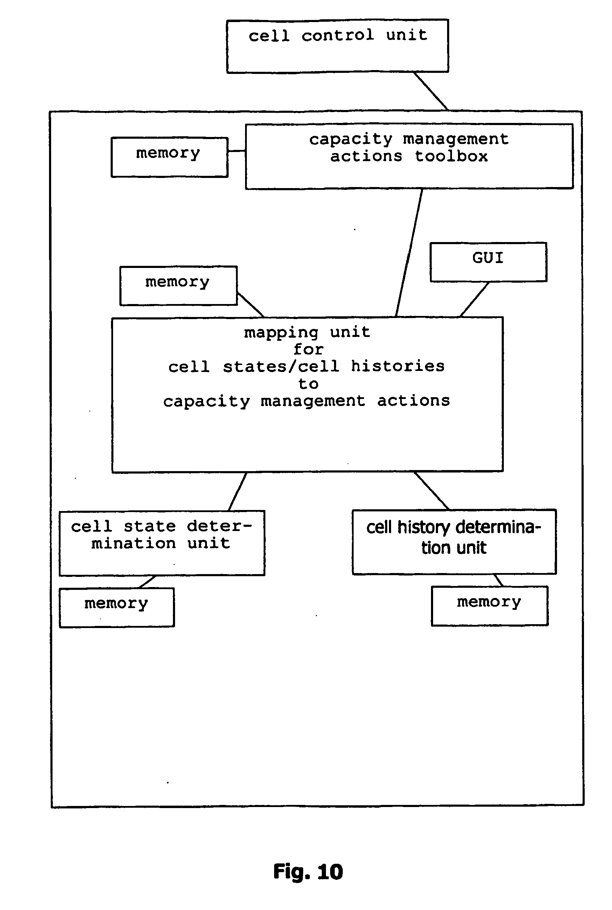

Fig. 10 illustrates an apparatus for a capacity management based on cell states and cell histories. The apparatus comprises the units shown in Fig. 7 and 8 which are operated as described, here in combination.

Apparatus for cell state and history and area capacity management based capacity management

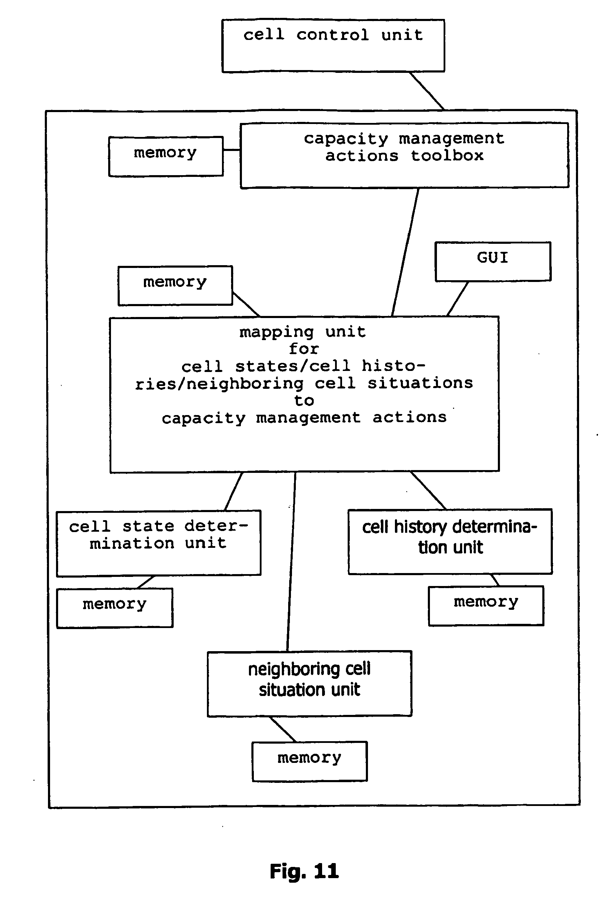

Fig. 11 illustrates an apparatus for a capacity management based on cell states, cell histories and neighboring cell situations. The apparatus comprises the units shown in Fig. 7 to 9 which are operated as described, here in combination.

Apparatus for area capacity management and cell state or cell history based capacity management

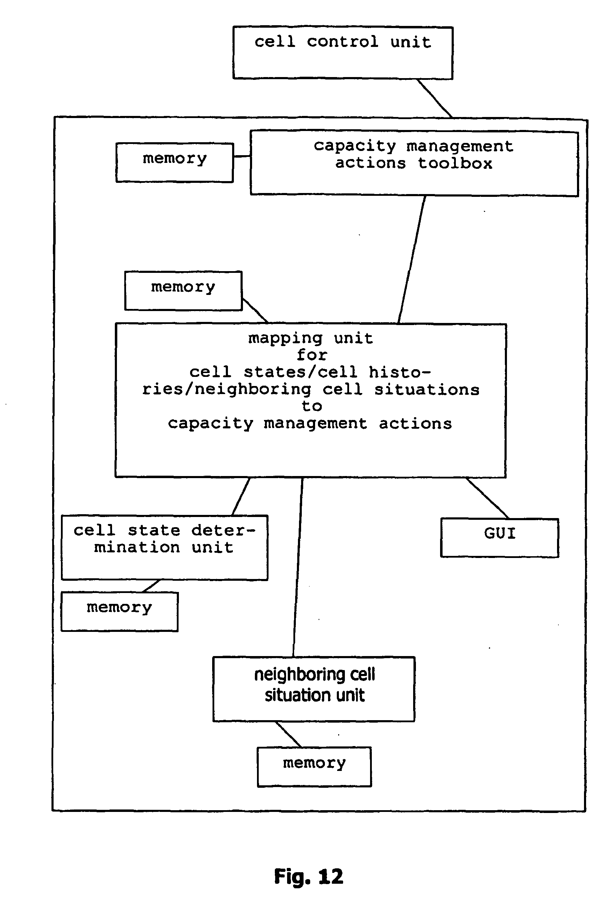

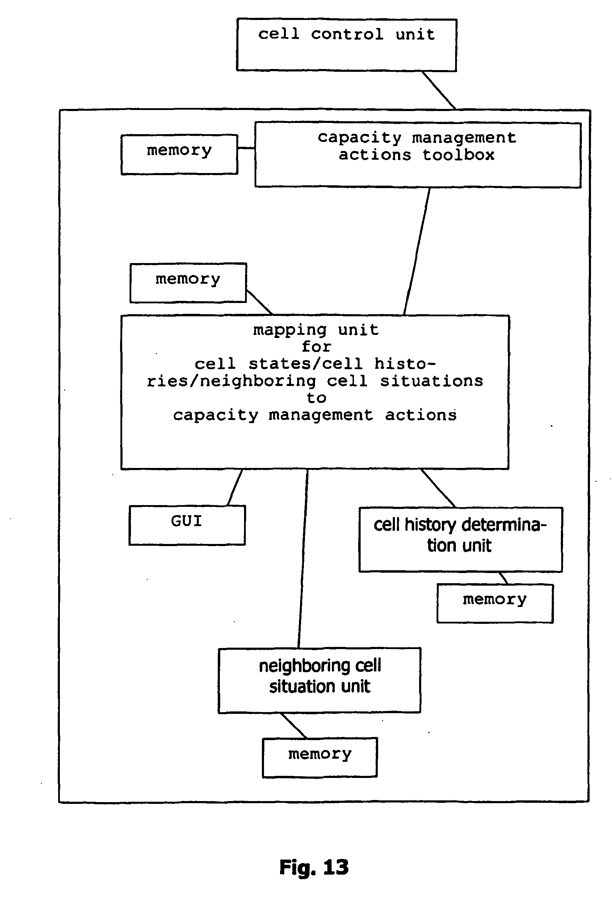

Fig. 12 and 13 illustrate apparatus for capacity management based on neighboring cell situations and on cell states or cell histories. The apparatus shown in Fig. 12 comprises the units shown in Fig. 7 and 9 which are operated, here in combination, as described. The apparatus shown in Fig. 13 comprises the units shown in Fig. 8 and 9 which are operated as described, here in combination.

Although Fig. 7 to 13 illustrate the cell control unit as being separated from the shown capacity management apparatus, it is contemplated that the cell control unit is comprised by a capacity management apparatus by means of an integral integration.

**Claims**

1. A method for capacity management in a cellular communication environment, comprising the steps of:

   - defining a number of cell situations for a cell of the cellular communications environment, each cell situation being indicative of a use of a capacity of the cell,
   - defining a number of capacity management actions for the cell, each capacity management action controlling a current use of the capacity of the cell,
   - mapping at least one of the cell situations to at least one of the capacity management actions,
   - determining a current cell situation for the cell, and
   - executing, if the current cell situation corresponds to one of the mapped cell situations, the at least one capacity management action to which the defined cell situation corresponding to the current cell situation is mapped to,

   **characterized, by**

   - mapping at least one of the cell situations to at least two of the opacity management actions, and
   - executing, if the current cell situation corresponds to one of the at least one cell situation mapped to at least two capacity management actions, the at least two capacity management actions to which the defined cell situation corresponding to the current cell situation is mapped to,
   - wherein the execution of the at least two capacity management actions includes weighing of the at least two capacity management actions with respect to each other, and
   - wherein the at least two management capacity actions are executed according to their relative weight.

2. The method according to claim 1, comprising the steps of:

   - defining a number of cell states of the cell as cell situations,
   - mapping at least one of the cell states to at least one of the capacity management actions, and
   - executing, if the current cell situation corresponds to one of the mapped cell states, the at least one capacity management action to which the defined cell state corresponding to the current cell situation is mapped to.

3. The method according to one of the preceding claims, comprising the steps of:

   - defining a number of cell histories of the cell as cell situations,
   - mapping at least one of the cell histories to at least one of the capacity management actions, and
   - executing, if the current cell situation corresponds to one of the mapped cell histories, the at least one capacity management action to which the defined cell history corresponding to the current cell situation is mapped to.

4. The method according to one of the preceding claims, comprising the steps of:

   - defining a number of neighboring cell states of at least one neighboring cell as cell situations,
   - mapping at least one of the neighboring cell states to at least one of the capacity management actions, and
   - executing, if the current cell situation corresponds to one of the mapped neighboring cell states, the at least one capacity management action to which the defined neighboring cell state corresponding to the current cell situation is mapped to.

5. The method according one of the preceding claims, comprising the steps of:

   - defining a number of neighboring cell histories of at least one neighboring cell as cell situations,
   - mapping at least one of the neighboring cell histories to at least one of the capacity management actions, and
   - executing, if the current cell situation corresponds to at least one of the mapped neighboring cell histories, the at least one capacity management action to which the defined neighboring cell history corresponding to the current cell situation is mapped to.

6. The method according one of the preceding claims, comprising the step of:

   - defining a number of allowable mappings of cell situations to capacity management actions, wherein the at least one mapping is carried out if the at least one mapping is comprised by the allowable mappings.

7. The method according one of the preceding claims, comprising the step of:

   - defining at least two mapping sets of allowable mappings of cell situations to capacity management actions, wherein the mapping is repeated until all mappings correspond to the allowable mappings of one of the mapping sets.

8. The method according one of the preceding claims, wherein

   - the mapping of cell situations to capacity management actions is performed by means of a graphical user interface.

9. The method according one of the claims 2 to 8 as far as depending from claim 2, wherein the determining of the current cell state as cell situation comprises at least one of:

   - calculating the current cell state on the basis of measurements of the use of the capacity the cell, and
   - monitoring the use of cell components.

10. The method according one of the claims 3 to 9 as far as depending from claim 3, wherein the determining of the current cell history as cell situation comprises:

    - storing the number of capacity management actions executed within a predefined period of time.

11. An apparatus for capacity management in a cellular communications environment, comprising:

    - a cell situation determination unit for storing a number of cell situations for a cell of the cellular communications environment, each cell situation being indicative of a use of a capacity of the cell, and determining a current cell situation for the cell,
    - a capacity management actions toolbox unit for storing a number of capacity management actions for the cell, each capacity management action controlling a current use of the capacity of the cell,
    - a mapping unit for mapping at least one of the cell situations to at least one of the capacity management actions,
    - the capacity management actions toolbox unit being configured to initiate, if the current cell situation corresponds to one of the mapped cell situations, the at least one capacity management action to which the defined cell situation corresponding to the current cell situation is mapped to,

    **characterized by**

    - the mapping unit for mapping at least one of the cell situations to at least two of the capacity management actions, and
    - the capacity management actions tool box unit being configured to initiate, if the current cell situation corresponds to one of the at least one cell situations mapped to at least two capacity management actions, the at least two capacity management actions to which the defined cell situation corresponding to the current cell situation is mapped, whereby the execution of the at least two capacity management actions includes weighting of the at least two capacity management actions with respect to each other such that the execution of the at least two capacity management actions is according to their relative weight.

12. The apparatus according claim 11, **characterized by**

    - the cell situation determination unit for storing a number of cell states of the cell as cell situations,
    - the mapping unit for mapping at least one of the cell states to at least one of the capacity management actions, and
    - the capacity management actions toolbox unit for initiating, if the current cell situation corresponds to one of the mapped cell states, the at least one capacity management action to which the defined cell state corresponding to the current cell situation is mapped to.

13. The apparatus according claim 11 or 12, **characterized by**

    - the cell determination unit for storing a number of cell histories of the cell as cell situations,
    - the mapping unit for mapping at least one of the cell histories to at least one of the capacity management actions, and

- the capacity management actions toolbox unit for initiating, if the current cell situation corresponds to one of the mapped cell histories, the at least one capacity management action to which the defined cell history corresponding to the current cell situation is mapped to.

14. The apparatus according to one of the claims 11 to 13, **characterized by**

- the cell determination unit for storing a number of neighboring cell states of at least one neighboring cell as cell situations,
- the mapping unit mapping at least one of the neighboring cell states to at least one of the capacity management actions, and
- the capacity management actions toolbox unit for initiating, if the current cell situation corresponds to one of the mapped neighboring cell states, the at least one capacity management action to which the defined neighboring cell state corresponding to the current cell situation is mapped to.

15. The apparatus according to one of the claims 11 to 14, **characterized by**

- the cell determination unit for storing a number of neighboring cell histories of at least one neighboring cell as cell situations,
- the mapping unit mapping at least one of the neighboring cell histories to at least one of the capacity management actions, and
- the capacity management actions toolbox unit for initiating, if the current cell situation corresponds to one of the mapped neighboring cell histories, the at least one capacity management action to which the defined neighboring cell history corresponding to the current cell situation is mapped to.

16. The apparatus according to one of the claims 11 to 15, **characterized by**:

- the mapping unit for storing a number of allowable mappings of cell situations to capacity management actions, wherein the mapping unit is for carrying out the at least one mapping if the at least one mapping is comprised by the allowable mappings.

17. The apparatus according to one of the claims 11 to 16, **characterized by**:

- the mapping unit for storing at least to mapping sets of allowable mappings of cell situations to capacity management actions, wherein the mapping unit repeats the mapping until all mappings correspond to the allowable mappings of one of the mapping sets.

18. The apparatus according to one of the claims 12 to 17 as far as depending from claim 12, **characterized by**:

- the cell determination unit for determining the current cell situation on the basis of at least one of calculating the current cell state on the basis of measurements of the use of the capacity the cell and monitoring the use of cell components.

19. The apparatus according to one of the claims 13 to 18 as far as depending from claim 13, **characterized by**:

- the cell determination unit for determining the current cell situation on the basis of storing the number of capacity management actions executed within a predefined period of time.

20. The apparatus according to one of the claims 11 to 19, **characterized by**:

- the capacity management toolbox unit for executing capacity management actions.

21. The apparatus according to one of the claims 11 to 20, comprising:

- a cell control unit for executing capacity management actions.

22. The apparatus according to one of the claims 11 to 21, being adapted to be operated according to the steps of one of the claims 1 to 10.

23. The apparatus according to one of the claims 11 to 22, **characterized by**:

- a graphical user interface for mapping of cell situations to capacity management actions at least partially under control of a user, the graphical user interface including means for selecting at least one of the cell situations, means for selecting at least one of the capacity management actions, and means for mapping the at least one selected cell situation to the at least one selected capacity management action.

24. Use of a graphical user interface for carrying out the method according to one of the claims 1 to 10, the graphical user interface for use in capacity management for a cellular communications environment, the capacity management being based on a number of cell situations for a cell of the cellular communications environment, each cell situation being indicative of a use of a capacity of the cell, and a number of capacity management actions for the cell, each capacity management action controlling a current use of the capacity of the cell, the graphical user interface comprising:

- means for selecting at least one of the cell situations,
- means for selecting at least one of the capacity management actions, and
- means for mapping the at least one selected cell situation to the at least one selected capacity management action.

25. A computer software program product, comprising program code portions for at least one of carrying out the steps of one of the claims 1 to 10, controlling the apparatus according to one of the claims 11 to 23 and implementing the use of the graphical user interface according to claim 24.

26. The computer software program product according to claim 25, being stored on a computer readable storage medium or stored in storage unit for access by a computer.


**Patentansprüche**

1. Verfahren zum Kapazitätsmanagement in einer zellularen Kommunikationsumgebung, umfassend die Schritte:

- Definieren einer Anzahl von Zellsituationen für eine Zelle der zellularen Kommunikationsumgebung, wobei jede Zellsituation eine Kapazitätsausnutzung der Zelle anzeigt,
- Definieren einer Anzahl von Kapazitätsmanagementaktionen für die Zelle, wobei jede Kapazitätsmanagementaktion eine aktuelle Kapazitätsausnutzung der Zelle steuert,
- Zuordnen mindestens einer der Zellsituationen zu mindestens einer der Kapazitätsmanagementaktionen,
- Bestimmen der aktuellen Zellsituation der Zelle und,
- wenn die aktuelle Zellsituation einer der zugeordneten Zellsituationen entspricht, Ausführen der mindestens einen Kapazitätsmanagementaktion, der die definierte Zellsituation zugeordnet ist, welche der aktuellen Zellsituation entspricht,

**gekennzeichnet durch**

- Zuordnen mindestens einer der Zellsituationen zu mindestens zweien der Kapazitätsmanagementaktionen und,
- wenn die aktuelle Zellsituation einer der mindestens einen Zellsituation entspricht, die mindestens zwei Kapazitätsmanagementaktionen zugeordnet ist, Ausführen der mindestens zwei Kapazitätsmanagementaktionen, denen die definierte Zellsituation zugeordnet ist, welche der aktuellen Zellsituation entspricht,
- wobei das Ausführen der mindestens zwei Kapazitätsmanagementaktionen ein Gewichten der mindestens zwei Kapazitätsmanagementaktionen relativ zueinander beinhaltet, und
- wobei die mindestens zwei Kapazitätsmanagementaktionen gemäß ihrer relativen Gewichtung ausgeführt werden.

2. Verfahren nach Anspruch 1, umfassend die Schritte:

- Definieren einer Anzahl von Zellzuständen der Zelle als Zellsituationen,
- Zuordnen mindestens eines der Zellzustände zu mindestens einer der Kapazitätsmanagementaktionen und,
- wenn die aktuelle Zellsituation einem der zugeordneten Zellzustände entspricht, Ausführen der mindestens einen Kapazitätsmanagementaktion, welcher der definierte Zellzustand zugeordnet ist, welcher der aktuellen Zellsituation entspricht.

3. Verfahren nach einem der vorhergehenden Ansprüche, umfassend die Schritte:

   - Definieren einer Anzahl von Zellhistorien der Zelle als Zellsituationen,
   - Zuordnen mindestens einer der Zellhistorien zu mindestens einer der Kapazitätsmanagementaktionen und,
   - wenn die aktuelle Zellsituation einer der zugeordneten Zellhistorien entspricht, Ausführen der mindestens einen Kapazitätsmanagementaktion, welcher die definierte Zellhistorie zugeordnet ist, welcher der aktuellen Zellsituation entspricht.

4. Verfahren nach einem der vorhergehenden Ansprüche, umfassend die Schritte:

   - Definieren einer Anzahl von Nachbarzellzuständen mindestens einer benachbarten Zelle als Zellsituationen,
   - Zuordnen mindestens einer der Nachbarzellzustände zu mindestens einer der Kapazitätsmanagementaktionen und,
   - wenn die aktuelle Zellsituation einem der zugeordneten Nachbarzellzustände entspricht, Ausführen der mindestens einen Kapazitätsmanagementaktion, welcher der definierte Nachbarzellzustand zugeordnet ist, welcher der aktuellen Situation entspricht.

5. Verfahren nach einem der vorhergehenden Ansprüche, umfassend die Schritte:

   - Definieren einer Anzahl von Nachbarzellhistorien mindestens einer benachbarten Zelle als Zellsituationen,
   - Zuordnen mindestens einer der Nachbarzellhistorien zu mindestens einer der Kapazitätsmanagementaktionen und,
   - wenn die aktuelle Zellsituation mindestens einer der zugeordneten Nachbarzellhistorien entspricht, Ausführen der mindestens einen Kapazitätsmanagementaktion, welcher die definierte Nachbarzellhistorie zugeordnet ist, welche der aktuellen Situation entspricht.

6. Verfahren nach einem der vorhergehenden Ansprüche, umfassend den Schritt:

   - Definieren einer Anzahl von zulässigen Zuordnungen von Zellsituationen zu Kapazitätsmanagementaktionen, wobei die mindestens eine Zuordnung durchgeführt wird, wenn die mindestens eine Zuordnung von den zulässigen Zuordnungen umfasst ist.

7. Verfahren nach einem der vorhergehenden Ansprüche, umfassend den Schritt:

   - Definieren von mindestens zwei Zuordnungsgruppen von zulässigen Zuordnungen von Zellsituationen zu Kapazitätsmanagementaktionen, wobei das Zuordnen wiederholt wird, bis alle Zuordnungen den zulässigen Zuordnungen einer der Zuordnungsgruppen entsprechen.

8. Verfahren nach einem der vorhergehenden Ansprüche, wobei

   - die Zuordnung der Zellsituationen zu Kapazitätsmanagementaktionen mittels einer grafischen Benutzeroberfläche durchgeführt wird.

9. Verfahren nach einem der Ansprüche 2 bis 8, soweit er von Anspruch 2 abhängig ist, wobei das Bestimmen des aktuellen Zellzustands als Zellsituation mindestens einen der folgenden Schritte umfasst:

   - Berechnen des aktuellen Zellzustands auf der Basis von Messungen der Kapazitätsausnutzung der Zelle und
   - Überwachen der Nutzung von Zellkomponenten.

10. Verfahren nach einem der Ansprüche 3 bis 9, soweit er von Anspruch 3 abhängig ist, wobei das Bestimmen der aktuellen Zellhistorie als Zellsituation umfasst:

   - Speichern der Anzahl von Kapazitätsmanagementaktionen, die innerhalb einer vordefinierten Zeitspanne ausgeführt werden.

**11.** Vorrichtung zum Kapazitätsmanagement in einer zellularen Kommunikationsumgebung, umfassend:

- eine Zellsituationsbestimmungseinheit zum Speichern einer Anzahl von Zellsituationen für eine Zelle der zellularen Kommunikationsumgebung, wobei jede Zellsituation eine Kapazitätsausnutzung der Zelle anzeigt, sowie zum Bestimmen einer aktuellen Zellsituation für die Zelle,
- eine Kapazitätsmanagementaktionstoolboxeinheit zum Speichern einer Anzahl von Kapazitätsmanagementaktionen für die Zelle, wobei jede Kapazitätsmanagementaktion eine aktuelle Kapazitätsausnutzung der Zelle steuert,
- eine Zuordnungseinheit zum Zuordnen mindestens einer der Zellsituationen zu mindestens einer der Kapazitätsmanagementaktionen,
- wobei die Kapazitätsmanagementaktionstoolboxeinheit derartig konfiguriert wird, dass, wenn die aktuelle Zellsituation einer der zugeordneten Zellsituationen entspricht, sie die mindestens eine Kapazitätsmanagementaktion startet, der die definierte Zellsituation zugeordnet ist, die der aktuellen Zellsituation entspricht,

**gekennzeichnet durch**

- die Zuordnungseinheit, welche mindestens eine der Zellsituationen mindestens zweiem der Kapazitätsmanagementaktionen zuordnet, und
- die Kapazitätsmanagementaktionstoolboxeinheit, welche derart konfiguriert wird, dass sie, wenn die aktuelle Zellsituation einer der mindestens einen Zellsituation entspricht, die mindestens zwei Kapazitätsmanagementaktionen zugeordnet ist, die mindestens zwei Kapazitätsmanagementaktionen startet, welchen die definierte Zellsituation zugeordnet ist, die der aktuellen Zellsituation entspricht, wodurch das Ausführen der mindestens zwei Kapazitätsmanagementaktionen beinhaltet, die beiden Kapazitätsmanagementaktionen relativ zueinander zu gewichten so dass die mindestens zwei Kapazitätsmanagementaktionen gemäß ihrer relativen Gewichtung ausgeführt werden.

**12.** Vorrichtung nach Anspruch 11, **gekennzeichnet durch**

- die Zellsituationsbestimmungseinheit zum Speichern einer Anzahl von Zellzuständen der Zelle als Zellsituationen,
- die Zuordnungseinheit zum Zuordnen mindestens eines der Zellzustände zu mindestens einer der Kapazitätsmanagementaktionen und
- die Kapazitätsmanagementaktionstoolboxeinheit zum Starten, wenn die aktuelle Zellsituation einem der zugeordneten Zellzustände entspricht, der mindestens einen Kapazitätsmanagementaktion, welcher der definierte Zellzustand, welcher der aktuellen Zellsituation entspricht, zugeordnet ist.

**13.** Vorrichtung nach Anspruch 11 oder Anspruch 12, **gekennzeichnet durch**

- die Zellbestimmungseinheit zum Speichern einer Anzahl von Zellhistorien der Zelle als Zellsituationen,
- die Zuordnungseinheit zum Zuordnen mindestens einer der Zellhistorien zu mindestens einer der Kapazitätsmanagementaktionen und,
- die Kapazitätsmanagementaktionstoolboxeinheit zum Starten, wenn die aktuelle Zellsituation einer der zugeordneten Zellhistorien entspricht, der mindestens einen Kapazitätsmanagementaktion, welcher die definierte Zellhistorie, welche der aktuellen Situation entspricht, zugeordnet ist.

**14.** Vorrichtung nach einem der Ansprüche 11 bis 13, **gekennzeichnet durch**

- die Zellbestimmungseinheit zum Speichern einer Anzahl von Nachbarzellzuständen mindestens einer benachbarten Zelle als Zellsituationen,
- wobei die Zuordnungseinheit mindestens einen der Nachbarzellzustände mindestens einer der Kapazitätsmanagementaktionen zuordnet, und
- die Kapazitätsmanagementaktionstoolboxeinheit zum Starten, wenn die aktuelle Zellsituation einem der zugeordneten Nachbarzellzustände entspricht, der mindestens einen Kapazitätsmanagementaktion, welcher der definierte Nachbarzellzustand, welcher der aktuellen Situation entspricht, zugeordnet ist.

**15.** Vorrichtung nach einem der Ansprüche 11 bis 14, **gekennzeichnet durch**

- die Zellbestimmungseinheit zum Speichern einer Anzahl von Nachbarzellhistorien mindestens einer benachbarten Zelle als Zellsituationen,

- wobei die Zuordnungseinheit mindestens einer der Nachbarzellhistorien mindestens einer der Kapazitätsmanagementaktionen zuordnet, und
- die Kapazitätsmanagementaktionstoolboxeinheit zum Starten, wenn die aktuelle Zellsituation einer der zugeordneten Nachbarzellhistorien entspricht, der mindestens einen Kapazitätsmanagementaktion, welcher die definierte Nachbarzellhistorie, welche der aktuellen Situation entspricht, zugeordnet ist.

16. Vorrichtung nach einem der Ansprüche 11 bis 15, **gekennzeichnet durch**:

   - die Zuordnungseinheit zum Speichern einer Anzahl von zulässigen Zuordnungen von Zellsituationen zu Kapazitätsmanagementaktionen, wobei die Zuordnungseinheit zum Durchführen der mindestens einen Zuordnung vorgesehen ist, wenn die mindestens eine Zuordnung von den zulässigen Zuordnungen umfasst ist.

17. Vorrichtung nach einem der Ansprüche 11 bis 16, **gekennzeichnet durch**:

   - die Zuordnungseinheit zum Speichern von mindestens zwei Zuordnungsgruppen von zulässigen Zuordnungen von Zellsituationen zu Kapazitätsmanagementaktionen, wobei die Zuordnungseinheit das Zuordnen wiederholt, bis alle Zuordnungen den zulässigen Zuordnungen einer der Zuordnungsgruppen entsprechen.

18. Vorrichtung nach einem der Ansprüche 12 bis 17 soweit dieser von Anspruch 12 abhängig ist, **gekennzeichnet durch**:

   - die Zellbestimmungseinheit zum Bestimmen der aktuelle Zellsituation basierend auf einer Berechnung des aktuellen Zellzustands auf der Basis von Messungen der Kapazitätsausnutzung der Zelle und/oder einer Überwachung der Ausnutzung von Zellkomponenten.

19. Vorrichtung nach einem der Ansprüche 13 bis 18 soweitr diese von Anspruch 13 abhängig ist, **gekennzeichnet durch**:

   - die Zellbestimmungseinheit zum Bestimmen der aktuellen Zellsituation auf Basis der Speicherung der Anzahl von Kapazitätsmanagementaktionen, die innerhalb einer vordefinierten Zeitspanne ausgeführt werden.

20. Vorrichtung nach einem der Ansprüche 11 bis 19, **gekennzeichnet durch**:

   - die Kapazitätsmanagementaktionstoolboxeinheit zum Durchführen von Kapazitätsmanagementaktionen.

21. Vorrichtung nach einem der Ansprüche 11 bis 20, umfassend:

   - eine Zellsteuereinheit zum Durchführen von Kapazitätsmanagementaktionen.

22. Vorrichtung nach einem der Ansprüche 11 bis 21, derart angepasst, dass sie nach den Schritten der Ansprüche 1 bis 10 betreibbar ist.

23. Vorrichtung nach einem der Ansprüche 11 bis 22, **gekennzeichnet durch**:

   - eine grafische Benutzeroberfläche zur Zuordnung von Zellsituationen zu Kapazitätsmanagementaktionen unter zumindest teilweiser Steuerung **durch** den Benutzer, wobei die grafische Benutzeroberfläche Mittel enthält zur Auswahl mindestens einer der Zellsituationen, Mittel zur Auswahl mindestens einer der Kapazitätsmanagementaktionen und Mittel zum Zuordnen der mindestens einen ausgewählten Zellsituation zu der mindestens einen ausgewählten Kapazitätsmanagementaktion.

24. Verwenden einer grafischen Benutzeroberfläche zum Durchführen des Verfahrens nach einem der Ansprüche 1 bis 10, wobei die grafische Benutzeroberfläche zur Verwendung im Kapazitätsmanagement für eine zellulare Kommunikationsumgebung vorgesehen ist, wobei das Kapazitätsmanagement auf einer Anzahl Zellsituationen für eine Zelle der zellularen Kommunikationsumgebung, wobei jede Zellsituation eine Kapazitätsausnutzung der Zelle anzeigt, und einer Anzahl von Kapazitätsmanagementaktionen für die Zelle basiert, wobei jede Kapazitätsmanagementaktion die aktuelle Kapazitätsausnutzung der Zelle steuert, und wobei die grafische Benutzeroberfläche umfasst:

- Mittel zur Auswahl mindestens einer der Zellsituationen,
- Mittel zur Auswahl mindestens einer der Kapazitätsmanagementaktionen und
- Mittel zum Zuordnen der mindestens einen ausgewählten Zellsituation zu der mindestens einen ausgewählten Kapazitätsmanagementaktion.

25. Computersoftwareprogramm-Erzeugnis, umfassend Programmcodeabschnitte zum Durchführen von mindestens einer der folgenden Aktionen:

   - Durchführen der Schritte nach einem der Ansprüche 1 bis 10,
   - Steuern der Vorrichtung nach einem der Ansprüche 11 bis 23 und
   - Realisieren der Verwendung der grafischen Benutzeroberfläche nach Anspruch 24.

26. Computersoftwareprogramm-Erzeugnis nach Anspruch 25, gespeichert auf einem computerlesbaren Speichermedium oder gespeichert in einer Speichereinheit für den Zugriff durch einen Computer.


**Revendications**

1. Procédé de gestion de capacité dans un environnement de communications cellulaires, comprenant les étapes de :

   - définition d'un certain nombre de situations de cellule pour une cellule de l'environnement de communications cellulaires, chaque situation de cellule étant indicatrice d'une utilisation d'une capacité de la cellule,
   - définition d'un certain nombre d'actions de gestion de capacité pour la cellule, chaque action de gestion de capacité commandant une utilisation actuelle de la capacité de la cellule,
   - mappage d'au moins une des situations de cellule sur au moins une des actions de gestion de capacité,
   - détermination d'une situation de cellule actuelle pour la cellule, et
   - si la situation de cellule actuelle correspond à l'une des situations de cellule mappées, exécution de l'au moins une action de gestion de capacité sur laquelle la situation de cellule définie correspondant à la situation de cellule actuelle est mappée,

   **caractérisé par**

   - le mappage d'au moins une des situations de cellule sur au moins deux des actions de gestion de capacité, et
   - si la situation de cellule actuelle correspond à une de l'au moins une situation de cellule mappée sur au moins deux actions de gestion de capacité, l'exécution des au moins deux actions de gestion de capacité sur lesquelles la situation de cellule définie correspondant à la situation de cellule actuelle sont mappées,
   - dans lequel l'exécution des au moins deux actions de gestion de capacité inclut la pondération des au moins deux actions de gestion de capacité l'une par rapport à l'autre, et
   - dans lequel les au moins deux actions de gestion de capacité sont exécutées selon leur pondération relative.

2. Procédé selon la revendication 1, comprenant les étapes de :

   - définition d'un certain nombre d'états de cellule de la cellule comme situations de cellule,
   - mappage d'au moins un des états de cellule sur au moins une des actions de gestion de capacité, et
   - si la situation de cellule actuelle correspond à l'un des états de cellule mappés, exécution de l'au moins une action de gestion de capacité sur laquelle l'état de cellule défini correspondant à la situation de cellule actuelle est mappé.

3. Procédé selon l'une des revendications précédentes, comprenant les étapes de :

   - définition d'un certain nombre d'historiques de cellule de la cellule comme situations de cellule,
   - mappage d'au moins un des historiques de cellule sur au moins une des actions de gestion de capacité, et
   - si la situation de cellule actuelle correspond à l'un des historiques de cellule mappés, exécution de l'au moins une action de gestion de capacité sur laquelle l'historique de cellule défini correspondant à la situation de cellule actuelle est mappé.

4. Procédé selon l'une des revendications précédentes, comprenant les étapes de :

- définition d'un certain nombre d'états de cellule voisine d'au moins une cellule voisine comme situations de cellule,
- mappage d'au moins un des états de cellule voisine sur au moins une des actions de gestion de capacité, et
- si la situation de cellule actuelle correspond à l'un des états de cellule voisine mappés, exécution de l'au moins une action de gestion de capacité sur laquelle l'état de cellule voisine défini correspondant à la situation de cellule actuelle est mappé.

5. Procédé selon l'une des revendications précédentes, comprenant les étapes de :

- définition d'un certain nombre d'historiques de cellule voisine d'au moins une cellule voisine comme situations de cellule,
- mappage d'au moins un des historiques de cellule voisine sur au moins une des actions de gestion de capacité, et
- si la situation de cellule actuelle correspond à au moins un des historiques de cellule voisine mappés, exécution de l'au moins une action de gestion de capacité sur laquelle l'historique de cellule voisine défini correspondant à la situation de cellule actuelle est mappé.

6. Procédé selon l'une des revendications précédentes, comprenant l'étape de :

- définition d'un certain nombre de mappages autorisés de situations de cellule sur des actions de gestion de capacité, dans lequel l'au moins un mappage est effectué si l'au moins un mappage est compris dans les mappages autorisés.

7. Procédé selon l'une des revendications précédentes, comprenant l'étape de :

- définition d'au moins deux ensembles de mappages parmi les mappages autorisés de situations de cellule sur des actions de gestion de capacité, dans lequel le mappage est répété jusqu'à ce que tous les mappages correspondent aux mappages autorisés de l'un des ensembles de mappages.

8. Procédé selon l'une des revendications précédentes, dans lequel

- le mappage de situations de cellule sur des actions de gestion de capacité est effectué au moyen d'une interface utilisateur graphique.

9. Procédé selon l'une des revendications 2 à 8 dans la mesure où elles dépendent de la revendication 2, dans lequel la détermination de l'état de cellule actuel comme situation de cellule comprend au moins l'un :

- d'un calcul de l'état de cellule actuel sur la base de mesures de l'utilisation de la capacité de la cellule, et
- d'une surveillance de l'utilisation de composants de cellule.

10. Procédé selon l'une des revendications 3 à 9 dans la mesure où elles dépendent de la revendication 3, dans lequel la détermination de l'historique de cellule actuel comme situation de cellule comprend :

- la mémorisation du nombre d'actions de gestion de capacité exécutées à l'intérieur d'une période de temps prédéfinie.

11. Appareil pour une gestion de capacité dans un environnement de communications cellulaires, comprenant :

- une unité de détermination de situation de cellule pour mémoriser un certain nombre de situations de cellule pour une cellule de l'environnement de communications cellulaires, chaque situation de cellule étant indicatrice d'une utilisation d'une capacité de la cellule, et pour déterminer une situation de cellule actuelle pour la cellule,
- une unité d'outils d'actions de gestion de capacité pour mémoriser un certain nombre d'actions de gestion de capacité pour la cellule, chaque action de gestion de capacité commandant une utilisation actuelle de la capacité de la cellule,
- une unité de mappage pour mapper au moins une des situations de cellule sur au moins une des actions de gestion de capacité,
- l'unité d'outils d'actions de gestion de capacité étant configurée pour initier, si la situation de cellule actuelle correspond à l'une des situations de cellule mappées, l'au moins une action de gestion de capacité sur laquelle la situation de cellule définie correspondant à la situation de cellule actuelle est mappée,

**caractérisé par**

- l'unité de mappage pour mapper au moins une des situations de cellule sur au moins deux des actions de gestion de capacité, et
- l'unité d'outils d'actions de gestion de capacité étant configurée pour initier, si la situation de cellule actuelle correspond à une de l'au moins une situation de cellule mappée sur au moins deux actions de gestion de capacité, les au moins deux actions de gestion de capacité sur lesquelles la situation de cellule définie correspondant à la situation de cellule actuelle sont mappées, dans lequel l'exécution des au moins deux actions de gestion de capacité inclut la pondération des au moins deux actions de gestion de capacité l'une par rapport à l'autre de telle sorte que l'exécution des au moins deux actions de gestion de capacité se fait selon leur pondération relative.

12. Appareil selon la revendication 11, **caractérisé par**

- l'unité de détermination de situation de cellule pour mémoriser un certain nombre d'états de cellule de la cellule comme situations de cellule,
- l'unité de mappage pour mapper au moins un des états de cellule sur au moins une des actions de gestion de capacité, et
- l'unité d'outils d'actions de gestion de capacité pour initier, si la situation de cellule actuelle correspond à l'un des états de cellule mappés, l'au moins une action de gestion de capacité sur laquelle l'état de cellule défini correspondant à la situation de cellule actuelle est mappé.

13. Appareil selon la revendication 11 ou 12, **caractérisé par**

- l'unité de détermination de situation de cellule pour mémoriser un certain nombre d'historiques de cellule de la cellule comme situations de cellule,
- l'unité de mappage pour mapper au moins un des historiques de cellule sur au moins une des actions de gestion de capacité, et
- l'unité d'outils d'actions de gestion de capacité pour initier, si la situation de cellule actuelle correspond à l'un des historiques de cellule mappés, l'au moins une action de gestion de capacité sur laquelle l'historique de cellule défini correspondant à la situation de cellule actuelle est mappé.

14. Appareil selon l'une des revendications 11 à 13, **caractérisé par**

- l'unité de détermination de situation de cellule pour mémoriser un certain nombre d'états de cellule voisine d'au moins une cellule voisine comme situations de cellule,
- l'unité de mappage mappant au moins un des états de cellule voisine sur au moins une des actions de gestion de capacité, et
- l'unité d'outils d'actions de gestion de capacité pour initier, si la situation de cellule actuelle correspond à l'un des états de cellule voisine mappés, l'au moins une action de gestion de capacité sur laquelle l'état de cellule voisine défini correspondant à la situation de cellule actuelle est mappé.

15. Appareil selon l'une des revendications 11 à 14, **caractérisé par**

- l'unité de détermination de situation de cellule pour mémoriser un certain nombre d'historiques de cellule voisine d'au moins une cellule voisine comme situations de cellule,
- l'unité de mappage mappant au moins un des historiques de cellule voisine sur au moins une des actions de gestion de capacité, et
- l'unité d'outils d'actions de gestion de capacité pour initier, si la situation de cellule actuelle correspond à l'un des historiques de cellule voisine mappés, l'au moins une action de gestion de capacité sur laquelle l'historique de cellule voisine défini correspondant à la situation de cellule actuelle est mappé.

16. Appareil selon l'une des revendications 11 à 15, **caractérisé par** :

- l'unité de mappage pour mémoriser un certain nombre de mappages autorisés de situations de cellule sur des actions de gestion de capacité, dans lequel l'unité de mappage sert à effectuer l'au moins un mappage si l'au moins un mappage est compris dans les mappages autorisés.

**17.** Appareil selon l'une des revendications 11 à 16, **caractérisé par** :

- l'unité de mappage pour mémoriser au moins deux ensembles de mappages parmi les mappages autorisés de situations de cellule sur des actions de gestion de capacité, dans lequel l'unité de mappage répète le mappage jusqu'à ce que tous les mappages correspondent aux mappages autorisés de l'un des ensembles de mappages.

**18.** Appareil selon l'une des revendications 12 à 17 dans la mesure où elles dépendent de la revendication 12, **caractérisé par** :

- l'unité de détermination de situation de cellule pour déterminer la situation de cellule actuelle sur la base d'au moins l'un d'un calcul de l'état de cellule actuel sur la base de mesures de l'utilisation de la capacité de la cellule et d'une surveillance de l'utilisation de composants de la cellule.

**19.** Appareil selon l'une des revendications 13 à 18 dans la mesure où elles dépendent de la revendication 13, **caractérisé par** :

- l'unité de détermination de situation de cellule pour déterminer la situation de cellule actuelle sur la base de la mémorisation du nombre d'actions de gestion de capacité effectuées à l'intérieur d'une période de temps prédéfinie.

**20.** Appareil selon l'une des revendications 11 à 19, **caractérisé par** :

- l'unité d'outils de gestion de capacité pour exécuter des actions de gestion de capacité.

**21.** Appareil selon l'une des revendications 11 à 20, comprenant :

- une unité de commande de cellule pour exécuter des actions de gestion de capacité.

**22.** Appareil selon l'une des revendications 11 à 21, étant adapté pour être utilisé selon les étapes de l'une des revendications 1 à 10.

**23.** Appareil selon l'une des revendications 11 à 22, **caractérisé par** :

- une interface utilisateur graphique pour le mappage de situations de cellule sur des actions de gestion de capacité au moins partiellement sous le contrôle d'un utilisateur, l'interface utilisateur graphique incluant un moyen pour sélectionner au moins une des situations de cellule, un moyen pour sélectionner au moins une des actions de gestion de capacité et un moyen pour mapper l'au moins une situation de cellule sélectionnée sur l'au moins une action de gestion de capacité sélectionnée.

**24.** Utilisation d'une interface utilisateur graphique pour mettre en oeuvre le procédé selon l'une des revendications 1 à 10, l'interface utilisateur graphique destinée à une utilisation dans une gestion de capacité pour un environnement de communications cellulaires, la gestion de capacité étant basée sur un certain nombre de situations de cellule pour une cellule de l'environnement de communications cellulaires, chaque situation de cellule étant indicatrice d'une utilisation d'une capacité de la cellule, et un certain nombre d'actions de gestion de capacité pour la cellule, chaque action de gestion de capacité commandant une utilisation actuelle de la capacité de la cellule, l'interface utilisateur graphique comprenant :

- un moyen pour sélectionner au moins une des situations de cellule,
- un moyen pour sélectionner au moins une des actions de gestion de capacité, et
- un moyen pour mapper l'au moins une situation de cellule sélectionnée sur l'au moins une action de gestion de capacité sélectionnée.

**25.** Produit de programme logiciel informatique, comprenant :

des parties de code de programme pour au moins l'une de l'exécution des étapes de l'une des revendications 1 à 10, de la commande de l'appareil selon l'une des revendications 11 à 23 et de la mise en oeuvre de l'utilisation de l'interface utilisateur graphique selon la revendication 24.

26. Produit de programme logiciel informatique selon la revendication 25, étant stocké sur un support de stockage lisible par un ordinateur ou stocké dans une unité de stockage pour un accès par un ordinateur.

**Fig. 1**

**Fig. 2**

Capacity Mangement in current networks

**Fig. 3**

Cell States – triggering part of all functions

| Cell state 1 | Cell state 2 | Cell state 3 | Cell state 4 | Cell state 5 |

Configuration {

| Action 1 | Action 2 | Action 3 | Action 3 | Action 4 |

Actions – collection of the actions from all capacity management functions

**Fig. 4**

A - **Cell States**

B      C      D      E      F

| Empty System | Low Load | Medium Load | High Load | Congestion |
|---|---|---|---|---|

G - **Actions**

H      I      J      K      L

| block speech | block data user | Lower AMR rate | down switch of best effort user | dropping of speech users |
|---|---|---|---|---|

**Fig. 5**

**History Monitor**

| Number of actions in the last 300 ms | No actions | 1, 2 or 3 actions | More than 3 actions |

1.

**Actions**

| block speech | block data user | Lower AMR rate | down switch of best effort user | dropping of speech users |

# Fig. 6

**Fig. 7**

cell control unit

memory

capacity management
actions toolbox

memory

mapping unit
for
cell histories
to
capacity management actions

GUI

cell history determina-
tion unit

memory

**Fig. 8**

cell control unit

memory

capacity management
actions toolbox

memory

mapping unit
for
neighboring cell situations
to
capacity management actions

GUI

neighboring cell
situation unit

memory

**Fig. 9**

cell control unit

memory

capacity management
actions toolbox

memory

GUI

mapping unit
for
cell states/cell histories
to
capacity management actions

cell state deter-
mination unit

cell history determina-
tion unit

memory

memory

**Fig. 10**

cell control unit

capacity management
actions toolbox

memory

GUI

memory

mapping unit
for
cell states/cell histo-
ries/neighboring cell situations
to
capacity management actions

cell state deter-
mination unit

cell history determina-
tion unit

memory

memory

neighboring cell
situation unit

memory

**Fig. 11**

cell control unit

capacity management
actions toolbox

memory

memory

mapping unit
for
cell states/cell histo-
ries/neighboring cell situations
to
capacity management actions

cell state deter-
mination unit

GUI

memory

neighboring cell
situation unit

memory

**Fig. 12**

cell control unit

memory

capacity management
actions toolbox

memory

mapping unit
for
cell states/cell histo-
ries/neighboring cell situations
to
capacity management actions

GUI

cell history determina-
tion unit

memory

neighboring cell
situation unit

memory

**Fig. 13**

## REFERENCES CITED IN THE DESCRIPTION

**Patent documents cited in the description**

• US 6141565 A